# EUROPÄISCHE PATENTSCHRIFT

(11) **EP 3 288 897 B1**
(45) Veröffentlichungstag und Bekanntmachung des Hinweises auf die Patenterteilung: **12.09.2018**
(21) Anmeldenummer: 16718645.1
(22) Anmeldetag: 21.04.2016
(51) Int. Cl.: C01B 33/152, C01B 33/155, C01B 33/158

(54) **VERFAHREN ZUR HERSTELLUNG ORGANISCH MODIFIZIERTER AEROGELE**
METHOD FOR PRODUCING ORGANICALLY MODIFIED AEROGELS
PROCÉDÉ DE FABRICATION D'AÉROGELS MODIFIÉS PAR DES GROUPES ORGANIQUES

(30) Priorität: 29.04.2015 DE 102015207944
(43) Veröffentlichungstag der Anmeldung: 07.03.2018
(73) Patentinhaber: Wacker Chemie AG, 81737 München (DE)
(72) Erfinder: HINDELANG, Konrad, 80939 München (DE); JANTKE, Dominik, 85386 Eching (DE); WEIDNER, Richard, 84489 Burghausen (DE)
(74) Vertreter: Fritz, Helmut
(86) Internationale Anmeldenummer: PCT/EP2016/058835
(87) Internationale Veröffentlichungsnummer: WO 2016/173913

(56) Entgegenhaltungen:
- DE-A1- 19 648 798
- US-A- 5 789 495
- US-A1- 2006 239 886
- RAO ET AL: "Hydrophobic and physical properties of the ambient pressure dried silica aerogels with sodium silicate precursor using various surface modification agents", APPLIED SURFACE SCIENCE, ELSEVIER, AMSTERDAM, NL, Bd. 253, Nr. 14, 19. April 2007 (2007-04-19), Seiten 6032-6040, XP022033066, ISSN: 0169-4332, DOI: 10.1016/J.APSUSC.2006.12.117

## Beschreibung

Gegenstand der Erfindung ist ein Verfahren zur Herstellung organisch modifizierter Aerogele, indem ein Sol enthaltend [SiO_{4/2}]-Einheiten hergestellt wird, das erhaltene Sol in einer kontinuierlichen Phase dispergiert wird, wobei das Sol eine separate Phase bildet und die kontinuierliche Phase mindestens 20 Gew.-% Organosiloxan enthält, aus dem Sol in der kontinuierlichen Phase ein Gel gebildet wird, das erhaltene Gel in Anwesenheit eines Phasenvermittlers in der kontinuierlichen Phase oberflächenmodifiziert wird, wobei als Initiator Säuren oder Chlorsilane oder Gemische daraus zugegeben werden und die erhaltenen Gele getrocknet werden.

Aerogele sind hochporöse Festkörper die bis zu mehr als 95 % des Volumens aus Poren bestehen. Während ein Lyogel ein mit Flüssigkeit gefülltes Gerüst darstellt, sind die Poren des Aerogels mit Luft gefüllt. Bei einem Hydrogel, das einen Spezialfall des Lyogels darstellt, besteht die Porenflüssigkeit zu mindestens 50% aus Wasser. Durch die poröse Struktur besitzen Aerogele eine hohe spezifische Oberfläche, geringe Porendurchmesser und eine besonders geringe Dichte. Diese Eigenschaften machen Aerogele zu idealen Materialien für Anwendungen in der thermischen Isolierung.

Es gibt verschiedene Arten von Aerogelen, wobei solche auf Silicatbasis am verbreitetsten und technisch aufgrund ihrer geringen Brennbarkeit von besonderer Relevanz sind.

Aerogele weisen eine Verästelung von Partikelketten mit sehr vielen Zwischenräumen in Form von offenen Poren auf. Diese Ketten besitzen Kontaktstellen, so dass sich letztendlich das Bild eines stabilen, schwammartigen Netzes ergibt.

Die Herstellung eines Aerogels verläuft im Prinzip sehr einfach. In einem ersten Schritt wird ein entsprechendes Lyogel hergestellt, wobei in einem zweiten Schritt das Lösungsmittel durch Luft ersetzt wird, d.h. es wird getrocknet.

Die Trocknung, d.h. Entfernung der Porenflüssigkeit, ist der für die Qualität von Aerogelen wesentliche Prozessschritt. Hierbei muss die Zerstörung der Gelstruktur vermieden werden. Hierfür existieren zwei wesentliche Strategien:
1) Durch "überkritisches Trocknen", d.h. Druck- und Temperaturbedingungen oberhalb des kritischen Punktes, kann erreicht werden, dass das Gel seine Struktur behält und nicht schrumpft oder kollabiert. Kapillarkräfte und damit die Zerstörung des Netzwerks werden im überkritischen Bereich weitgehend vermieden. Der Nachteil dieser Methode ist, dass für dieses Verfahren eine technisch anspruchsvolle, kostspielige Hochdruck-Technologie erforderlich ist und das Verfahren deshalb großtechnisch, insbesondere als kontinuierliches Verfahren, schwer zu realisieren ist.
2) Das gleiche Ergebnis kann durch Trocknen bei Normaldruck erreicht werden, wenn zuvor die Porenoberfläche durch Modifizierung (Silylierung) passiviert wurde. Dies bedeutet, dass durch Silylierung der freien Silanol-Gruppen im Gel die irreversible Schrumpfung der Gelstruktur während der Trocknung weitgehend vermieden werden kann. Da für die Modifizierung meist hydrolyseempfindliche Stoffe wie Trimethylchlosilan und Hexamethyldisilazan eingesetzt werden, wird in der Regel zunächst ein Lösungsmittelaustausch durchgeführt. Die wasserhaltige Porenflüssigkeit wird dabei in mehreren Lösemittelaustauschschritten durch inerte, organische Lösemittel wie Hexan ersetzt, um die Reaktion des Hydrophobierungsmittels (z.B. Trimethylchlorsilan) mit dem Wasser der Porenflüssigkeit zu vermeiden.

Neben der Stabilisierung des Gerüstes im Trocknungsschritt führt die Oberflächenmodifizierung zu einer Hydrophobierung der äußeren und inneren Oberfläche der Aerogele. Für viele Anwendungen ist eine ausreichende Hydrophobie unerlässlich. Insbesondere in der Bauisolierung müssen Dämmstoffe dauerhaft wasserabweisend sein, weshalb hydrophobe Materialien für solche Anwendungen bevorzugt werden.

Die hohe spezifische Oberfläche der Aerogele eröffnet den Einsatz als Trägermaterial und Transportagens in der Chemie beispielsweise für die Katalyse oder in der Medizin. Des weiteren eignen sich Aerogele durch die spezifische Oberfläche auch zum Einsatz als Absorber- oder Filtermaterialen.

Zu der herausragendsten Eigenschaft von Aerogelen gehört ihre außergewöhnlich geringe thermische Leitfähigkeit. Die hohe Isolierwirkung wird durch den besonderen Aufbau der Aerogele, insbesondere ihre außergewöhnlichen Porenstruktur (Dichten unter 0,2 g/cm³, Mesoporenvolumia über 3 cm³/g und Porendurchmesser unter 25 nm), ermöglicht.
Wärmedämmung (auch Wärmeisolierung genannt) ist ein wichtiger Aspekt zur Verminderung des Energieverbrauchs. Insbesondere in der Bauisolierung gelangen konventionelle, kostengünstige Dammmaterialien wie Polystyrol, Polyurethan und Glaswolle aufgrund ihrer hohen Brennbarkeit und/oder begrenzten Isolierwirkung zunehmend an ihre Grenzen.

Für einen kompetitiven Einsatz der Aerogele ist eine kostengünstige Herstellung essentiell. Daher ist es vorteilhaft, möglichst wenige Prozessschritte durchzuführen und insbesondere besonders auf zeitaufwändige Schritte wie einen mehrstufigen Lösemittelaustausch zu verzichten.

Dementsprechend wurde in EP 0 948 395 B1 ein Verfahren zur Herstellung von organisch modifizierten Aerogelen entwickelt, in dem ein Hydrogel direkt oberflächenmodifiziert wird, ohne vorher die wässrige Porenflüssigkeit durch organische Lösemittel zu ersetzen. In den Beispielen wird eine Natriumwasserglaslösung oder Siliciumtetrachlorid als SiO₂-Quelle verwendet und Hexamethyldisiloxan (HMDSO, (CH₃)₃Si-O-Si(CH₃)₃), Trimethylchlorsilan (TMCS, (CH₃)₃SiCl) oder Trimethylsilanol ((CH₃)₃SiOH) zur Modifizierung eingesetzt. Die freien OH-Gruppen des Hydrogels reagieren dabei mit den Silylierungsagenzien zu Sauerstoff-gebundenen Trimethylsilylgruppen (TMS, (CH₃)₃SiO_{1/2}). Wird die Silylierung so durchgeführt, dass ein Teil des Wassers in den Poren des Hydrogels mit dem verwendeten Silylierungsmittel (z.B. TMCS) zu dem wasserunlöslichen Hexamethyldisiloxan reagiert, so wird durch das Volumen der gebildeten Verbindung notwendigerweise mindestens ein Teil des Wassers aus den Poren verdrängt. Dies führt während der Silylierung der inneren Oberfläche des Netzwerks zu einem gleichzeitigen, vollständigen oder teilweisen Austausch der Flüssigkeit in den Poren des Hydrogels durch das wasserunlösliche Medium.
Das offenbarte Verfahren hat den Nachteil, dass die Oberflächenmodifizierung (Silylierung) entweder bei hohen Temperaturen von 80-100 °C stattfindet oder eine sehr lange Reaktionszeit von mehreren Tagen erforderlich ist. Nur durch die Verwendung großer Mengen an HCl und/oder Trimethylchlorsilan gelingt hierbei eine schnelle und vollständige Oberflächenmodifizierung. Während der Hydrophobierung wird die Porenflüssigkeit aus dem Gel verdrängt und durch HMDSO ersetzt, wobei die Autoren dieses Patents, F. Schwertfeger und D. Frank, in einer nachfolgenden Publikation mit M. Schmidt im Journal of non-Crystalline Solids (Vol. 225, S. 24-29, 1998) konkretisieren, dass sie für einen vollständigen Austausch der Porenflüssigkeit mindestens 15 mol% TMCS bezogen auf das Porenwasser, das entspricht 81,5 g TMCS je 100 g Hydrogel (s. Probe 2 in Tab. 1), benötigen, um einen vollständigen Austausch der Porenflüssigkeit und damit Aerogele geringer Dichte (kleiner 140 kg/m³) zu erhalten. Dabei entstehen je 100 g Hydrogel 80 ml HMDSO als Nebenprodukt. Neben den anfallenden Rohstoffkosten entsteht zudem ein Entsorgungsproblem. Die wässrige, zum Teil mit Salzen verunreinigte HCl kann in der Regel nicht recycelt werden, sondern muss über das Abwasser entsorgt werden. Durch den hohen Überschuss an Trimethylchlorsilan entsteht eine große Menge an Hexamethyldisiloxan, das erst durch einen zusätzlichen Prozessschritt wieder in Trimethylchlorsilan überführt werden kann. Auch die bei der Verwendung großer Mengen an TMCS entstehende Reaktionswärme erfordert einen erhöhten prozesstechnischen Aufwand. Deshalb, aber auch um die Menge an Gefahrstoffen zu minimieren und dadurch die Prozesssicherheit zu erhöhen, sollte die Menge an Salzsäure und Trimethylchlorsilan minimiert werden.

In den meisten, beschriebenen Verfahren wie z.B. auch in EP 0 948 395 B1 werden zunächst über bekannte Verfahren Gele hergestellt und diese anschließend vor Lösemittelaustauschschritten und/oder der Silylierung zerkleinert, um die äußere Oberfläche der Gelstücke zu erhöhen und dadurch Stoffaustauschprozesse zu beschleunigen. Silica-basierte Gele sind keineswegs weich oder elastisch, wie z.B. auf organischen Polymeren basierte Gele. Daher zersplittern Silicagele bei der Zerkleinerung relativ unkontrolliert zu verschieden großen Bruchstücken, was eine kontrollierte Einstellung der Partikelgröße erschwert. Prozessbedingt besitzen solche Bruchstücke Ecken und Kanten, was in der Weiterverarbeitung der Aerogele zu einem erhöhten Abrieb führen kann. Auch verfahrenstechnisch ist eine solche Prozessführung nachteilig, da eine Zerkleinerung einen zusätzlichen Prozessschritt erfordert.

Um diese verfahrenstechnischen Nachteile zu lösen, wurden bereits neue Verfahren entwickelt, die eine Gelherstellung in Emulsion ermöglichen. In US20130189521A1 beispielsweise werden Sole basierend auf Wasserglas in organischen Lösemitteln wie Hexan emulgiert und in dem organischen Lösemittel das Sol in ein Gel überführt. Um die Gelpartikel unter nicht kritischen Bedingungen trocknen zu können, wird die Porenflüssigkeit zunächst durch Ethanol und schließlich Hexan ersetzt und mit Silylierungsmitteln oberflächenmodifiziert. Über dieses Verfahren sind zwar keine Zerkleinerungsschritte notwendig, die mehrfachen Lösemittelaustauschschritte sind allerdings verfahrenstechnisch aufwendig und benötigen große Mengen an Lösemittel.

In EP 1047633 B1 konnte am Beispiel einer sogenannten Tropfensäule gezeigt werden, dass die Gelbildung auch direkt in einem Silylierungsmittel durchgeführt werden kann. Der Fokus des Patents liegt auf der Herstellung kugelförmiger Gelpartikel. Eine Oberflächenmodifizierung wurde in dem erfindungsgemäßen Beispiel nicht offenbart. Da die Zusammensetzung des Gels und die Zusammensetzung des Silylierungsmittels in EP 1047633 B1 den Beispielen in dem Patent EP 0 948 395 B1 entspricht, ist auch in diesem Fall von hohen Reaktionstemperaturen und einem hohen Bedarf an Trimethylchlorsilan und/oder Salzsäure zum Start der Silylierungsreaktion auszugehen (vlg. Diskussion zu EP 0 948 395 B1).

Aufgabe der Erfindung ist es daher, ein wirtschaftliches Verfahren für die Herstellung von hydrophobierten Aerogelen zur Verfügung zu stellen, das kostengünstig, einfach und sicher in der Handhabung ist und ressourcenschonend arbeitet.

Diese Aufgabe wird gelöst durch die Bereitstellung eines Verfahrens zur Herstellung organisch modifizierter Aerogele, indem ein Sol enthaltend [SiO_{4/2}]-Einheiten hergestellt wird, das erhaltene Sol in einer kontinuierlichen Phase dispergiert wird, wobei das Sol eine separate Phase bildet und die kontinuierliche Phase mindestens 20 Gew.-% Organosiloxan enthält, aus dem Sol in der kontinuierlichen Phase ein Gel gebildet wird, das erhaltene Gel in Anwesenheit eines Phasenvermittlers in der kontinuierlichen Phase oberflächenmodifiziert wird, wobei als Initiator Säuren oder Chlorsilane oder Gemische daraus zugegeben werden und die erhaltenen Gele getrocknet werden.

Wie bereits in der Einleitung beschrieben, sind Aerogele hochporöse Festkörper, bei denen die Poren mit Luft gefüllt sind. Dagegen wird unter einem Lyogel ein Gel verstanden, dessen Poren mit Lösungsmittel gefüllt sind. Bei einem Hydrogel, das einen Spezialfall des Lyogels darstellt, sind die Poren überwiegend mit Wasser als Lösungsmittel gefüllt.

Zunächst wird ein Sol enthaltend [SiO_{4/2}]-Einheiten hergestellt. In der vorliegenden Erfindung bezeichnet ein Sol eine Lösung und/oder kolloidale Dispersion von Molekülen und/oder Partikeln in mindestens einem Lösungsmittel bzw. Dispersionsmedium.

Ein Lösungsmittel (auch Lösungsmittel oder Solvens) ist ein Stoff, der Gase, Flüssigkeiten oder Feststoffe lösen oder verdünnen kann, ohne dass es dabei zu chemischen Reaktionen zwischen gelöstem Stoff und lösendem Stoff kommt.

Eine Dispersion ist ein heterogenes Gemisch aus mindestens zwei Stoffen, die sich nicht oder kaum ineinander lösen oder chemisch miteinander verbinden. Dabei ist ein oder mehrere Stoffe (disperse Phase) fein verteilt in einem anderen kontinuierlichen Stoff (Dispersionsmedium, Synonym = kontinuierliche Phase). Nach ihrer Teilchengröße bezeichnet man als kolloidal dispers gelöst disperse Phasen mit einer Teilchengröße von typischerweise ca. 1 nm bis 1 µm.

Die [SiO_{4/2}]-Einheiten bezeichnen Verbindungen, in denen ein Siliciumatom an vier Sauerstoffatome gebunden ist, die wiederum jeweils ein freies Elektron für eine weitere Bindung aufweisen. Es können über das Sauerstoffatom verbundene Einheiten mit Si-O-Si-Bindungen vorliegen. Die freien Sauerstoffatome sind im einfachsten Fall an Wasserstoff oder Kohlenstoff gebunden bzw. die Verbindungen liegen als Salze bevorzugt Alkalisalze vor.

Als Ausgangsstoff (Vorstufe) zur Bildung von [SiO_{4/2}]-Einheiten ([SiO_{4/2}]-Ausgangsstoff) können dem Fachmann bekannte, kondensationsfähige tetra- oder höherfunktionelle Silane, Alkoxysilane, Alkylsilicate, Alkalisilicate oder kolloidale Silica-Partikel bzw. -Lösungen verwendet werden.
Es ist bevorzugt, als Ausgangsstoff für [SiO_{4/2}]-Einheiten Verbindungen das Typs Si(OR)₄, [SiO_{4/2}]_{w}[SiO_{3/2}(OR)]ₓ[SiO_{2/2}(OR)₂]_{y}[SiO_{1/2}(OR)₃]_{z} (mit w, x, y, z als nicht negative, ganze Zahl), SiCl₄, Wassergläser oder kolloidale Silica-Lösungen einzusetzten. Für R gilt die bereits gegebene Definition. Insbesondere bevorzugt wird Tetraethylorthosilicat (TEOS) oder Natriumwasserglas eingesetzt. Es können auch Gemische oder Hydrolyseprodukte der genannten Ausgangsstoffe, insbesondere deren Hydrolyseprodukte mit Wasser und/oder Alkoholen, eingesetzt werden.

Als Wasserglas werden aus einer Schmelze erstarrte, glasartige, also amorphe, wasserlösliche Natrium-, Kalium- und Lithiumsilicate oder ihre wässrigen Lösungen bezeichnet. Durch Neutralisieren des Salzes und Hydrolyse entstehen aus den kettenartigen Si-O-Si-Verbindungen [SiO_{4/2}]-Einheiten.

Insbesondere bevorzugt wird Tetraethylorthosilicat (TEOS) eingesetzt. Die Hydrolyse von TEOS in Wasser kann durch Säuren oder Basen katalysiert werden:

C₈H₂₀O₄Si + 4 H₂O → H₄SiO₄ + 4 C₂H₅OH

wobei die gebildete Orthokieselsäure (H₄SiO₄) durch Ausbildung von Si-O-Si-Bindungen und Abgabe von Wasser weiter vernetzt, bis stöchiometrisch Siliciumdioxid entsteht:

H₄SiO₄ → H₂SiO₃ + H₂O

H₂SiO₃ → SiO₂ + H₂O

Bevorzugt wird die Hydrolyse von Tetraalkoxysilanen in wässrigen Lösungen mineralischer oder organischer Säuren, insbesondere bevorzugt in wässriger Salzsäurelösung durchgeführt.

[SiO_{4/2}]-Einheiten zählen zu den oxidischen Einheiten. Unter einer oxidischen Einheit versteht man im Rahmen dieser Erfindung Verbindungen, in denen ein Metallatom ausschließlich an Sauerstoffatome gebunden ist, die wiederum jeweils ein freies Elektron für eine weitere Bindung aufweisen. Als oxidische Einheiten können [SiO_{4/2}]-Einheiten mit allen dem Fachmann bekannten, hydrolysestabilen Metalloxiden oder deren Mischungen vorliegen, bevorzugt liegen zusätzlich zu den [SiO_{4/2}]-Einheiten als oxidische Einheiten drei- oder vierwertige Einheiten, besonders bevorzugt nur [SiO_{4/2}]-Einheiten vor. Erfindungsgemäß enthält das Sol [SiO_{4/2}]-Einheiten. Bevorzugt enthält der feste Anteil des Sols höchstens 50 Gew.-%, besonders bevorzugt höchstens 20 Gew.-%, insbesondere bevorzugt höchstens 5 Gew.-% und im speziellen bevorzugt keine weiteren oxidischen Einheiten.

Als Ausgangsstoff (Vorstufe) für die Bildung von oxidischen Einheiten können beispielsweise alle dem Fachmann bekannten, kondensationsfähigen Metallalkoxide, Alkalisalze, Halogenidsalze oder weitere organische oder anorganische Vorstufen eingesetzt werden.

Neben den [SiO_{4/2}] -Einheiten können gegebenenfalls auch [RₓSiO_{(4-x)/2}]-Einheiten (mit x=1, 2 oder 3 oder deren Gemische und R ist gleich oder verschieden und R ist Wasserstoff oder ein organischer, substituierter oder unsubstituierter Rest) enthalten sein.

Bei den [RₓSiO_{(4-x)/2}] -Einheiten (mit x=1, 2 oder 3 oder deren Gemische) sind neben ein, zwei oder drei Sauerstoffatomen ein, zwei oder drei Reste R direkt an das Siliciumatom gebunden. Es können entweder in allen [RₓSiO_{(4-x)/2}]-Einheiten ein Rest R und drei Sauerstoffatome, d.h. x=1, oder in allen [RₓSiO_{(4-x)/2}]-Einheiten zwei Reste R und zwei Sauerstoffatome, d.h. x=2, oder in allen [RₓSiO_{(4-x)/2}]-Einheiten drei Reste R und ein Sauerstoffatom, d.h. x=3, an das Siliciumatom gebunden sein. Es können auch Gemische enthaltend [RSiO_{3/2}]-Einheiten und/oder [R₂SiO_{2/2}]-Einheiten und/oder [RSiO_{1/2}]-Einheiten vorliegen. Auch hier steht O_{(4-x)/2} (z.B. O_{3/2},O_{2/2} oder O_{1/2}) für 4-x (=3, 2 oder 1) Sauerstoffatome, die jeweils ein freies Elektron für eine weitere Bindung aufweisen.

Als Ausgangsstoff (Vorstufe) zur Bildung von [RₓSiO_{(4-x)/2}]-Einheiten ([RₓSiO_{(4-x)/2}]-Ausgangsstoff) können dem Fachmann bekannte, kondensationsfähige bifunktionelle, trifunktionelle oder höher funktionelle Silane, Alkoxysilane oder Siliconate eingesetzt werden. Gegebenenfalls können auch monofunktionelle Silane, Alkoxysilane oder Siliconate eingesetzt werden. Für R gilt die unten aufgeführte Definition.

Bevorzugt enthält der feste Anteil des Sols höchstens 50 Gew.-%, besonders bevorzugt höchstens 20 Gew.-%, insbesondere bevorzugt höchstens 5 Gew.-% und im speziellen bevorzugt höchstens 0,1 Gew.-% [RₓSiO_{(4-x)/2}]-Einheiten. In einer darüber hinaus besonders bevorzugten Ausführungsformenthält das Sol keine [RₓSiO_{(4-x)/2}]-Einheiten.

Darüber hinaus können dem Sol Zusatzstoffe wie dem Fachmann bekannte IR-Trübungsmittel zur Reduzierung der Wärmeleitfähigkeit zugesetzt werden. Ebenso können zur Erhöhung der mechanischen Stabilität beschichtete und/oder unbeschichtete Fasern zugesetzt werden. Als Fasermaterialien können anorganische Fasern, wie z. B. Glasfasern oder Mineralfasern, organische Fasern, wie z. B. Polyesterfasern, Aramidfasern, Nylonfasern oder Fasern pflanzlichen Ursprungs, sowie Gemische derselben verwendet werden.

Aus den Ausgangsstoffen zur Bildung von [SiO_{4/2}]-Einheiten und gegebenenfalls zur Bildung von weiteren oxidischen Einheiten und/oder [RₓSiO_{(4-x)/2}]-Einheiten, sowie gegebenenfalls Zusatz- und Hilfsstoffen werden nach den dem Fachmann bekannten Methoden Sole hergestellt. Unter einer Solherstellung versteht man das Mischen von mindestens einem Ausgangsstoff mit mindestens einem Lösungsmittel bzw. Dispergiermittel. Dabei kann während und/oder nach dem Mischen auch eine Reaktion der Ausgangsverbindungen stattfinden.
Unter einem Alkyoxysilan-basierten Verfahren versteht man, dass Sole aus Alkoxysilanen beispielsweise durch Hydrolyse unter Freisetzung der entsprechenden Alkohole hergestellt werden. Die Hydrolyse kann durch Zugabe von Säure und/oder Temperaturerhöhung beschleunigt werden.
Sole aus Wassergläsern und/oder Siliconaten werden beispielsweise durch Neutralisation der stark basischen Alkalisilikate hergestellt. Dies kann nach dem Fachmann bekannten Methoden wie z.B. in EP 0 948 395 B beschrieben, durch Neutralisation mit Mineralsäuren und mittels saurer Ionenaustauscherharzen erfolgen.

Bevorzugt beträgt der Feststoffgehalt, also der Gehalt an oxidischen Einheiten, d.h. der Gehalt an [SiO_{4/2}]-Einheiten und gegebenenfalls weiteren oxidischen Einheiten, im Sol zwischen 3 und 30 Gew.-%, besonders bevorzugt zwischen 5 und 20 Gew.-%, insbesondere bevorzugt zwischen 8 und 15 Gew.-%.

In einer bevorzugten Ausführungsform wird als [SiO_{4/2}]-Ausgangsstoff Tetraethoxysilan (TEOS) oder Wasserglas oder deren Hydrolyseprodukte eingesetzt. Insbesondere bevorzugt wird als [SiO_{4/2}]-Ausgangsstoff TEOS eingesetzt. Besonders bevorzugt wird TEOS für die Solherstellung unter Rühren in Wasser mit Salzsäure als Katalysator überführt (Beispiel 1 und 3). Als Lösemittel bzw. Lösemittelgemisch für die Solherstellung werden im Allgemeinen Wasser oder homogene Gemische aus Wasser und polaren, organischen Lösemitteln, bevorzugt Alkoholen, eingesetzt. Der Wassergehalt ist dabei bevorzugt hoch genug, damit das wasserhaltige Gemisch im Silylierungsmittel eine separate Flüssigphase ausbildet. Die Solbildung kann durch Zugabe von Katalysatoren, bevorzugt Säuren beschleunigt werden. Als Säuren können Mineralsäuren oder organische Säuren eingesetzt werden. Besonders bevorzugt wird Salzsäure eingesetzt. Die Salzsäure dient hierbei als Katalysator für die Hydrolyse der Alkoxygruppen. Die HCl-Konzentration beträgt dabei bevorzugt 10-1000 ppm, bevorzugt 30-300 ppm, insbesondere bevorzugt 100-200 ppm. Zur Beschleunigung der Hydrolyse kann das Reaktionsgemisch erwärmt werden. Dieser Schritt erfolgt bevorzugt bei 40 bis 80°C, besonders bevorzugt bei 55-65 °C für eine Zeit von bevorzugt 0,1 bis 3 Stunden, besonders bevorzugt 0,5 bis 1 Stunde. Dadurch entsteht ein klares Sol, das gegebenenfalls auch mehrere Stunden bis Tage gelagert werden kann. Bevorzugt wird das Sol aber direkt weiter umgesetzt.
Vergleichbare Sole sind auch auf Basis von Wasserglas, insbesondere Natriumwasserglas als Ausgangsstoffe zur Bildung von [SiO_{4/2}] -Einheitenüber dem Fachmann bekannte Methoden zugänglich (z.B. EP 0 948 395 B oder Beispiel 2), wobei gegebenenfalls auch Alkalimethylsiliconate wie Kalium- oder Natriummethylsiliconat zugegeben werden können.

Im 2. Schritt (ii) des Verfahrens wird das erhaltene Sol in einer kontinuierlichen Phase dispergiert, wobei das Sol eine separate Phase bildet und die kontinuierliche Phase mindestens 20 Gew.-% Organosiloxan enthält. Die kontinuierliche Phase enthält erfindungsgemäß mindestens 20 Gew.-%, bevorzugt mindestens 50 Gew.-%, besonders bevorzugt mindestens 90 Gew.-%, insbesondere bevorzugt mindestens 95 Gew.-% und speziell bevorzugt mindestens 98 Gew.-% Organosiloxan.

In einer besonders bevorzugten Ausführungsform wird das flüssige Sol in das Silylierungsmittel überführt. In diesem Fall ist die kontinuierliche Phase gleichzeitig das Silylierungsmittel. Das bedeutet, dass in dieser bevorzugten Ausführungsform die Formgebung durch Dispergieren des Sols in einer kontinuierlichen Phase erfolgt, wobei die kontinuierliche Phase mindestens 20 Gew.-% Organosiloxan enthält. D.h. die kontinuierliche Phase dient gleichzeitig als Reagenz zur Oberflächenmodifizierung.

Unter einem Silylierungsmittel werden in der vorliegenden Anmeldung Organosiloxane, insbesondere Disiloxane, sowie Lösungen dieser in nicht reaktiven, polaren Lösungsmitteln verstanden, wobei im Silylierungsmittel gegebenenfalls Initiatoren wie Chlorsilane, insbesondere Trimethylchlorsilan, Säuren, insbesondere Salzsäure (HCl), sowie aus dem Organosiloxan, insbesondere Disiloxan, entstehende Spaltprodukte enthalten sein können. Die Lösungsmittel sind bevorzugt Kohlenwasserstoffe wie Pentan, Hexan, Heptan und Toluol.
Unter Organosiloxanen werden in der vorliegenden Anmeldung lineare, cyclische oder verzweigte Verbindungen des Typs [R₃SiO_{1/2}]ₘ[R₂SiO]ₙ[RSiO_{3/2}]ₒ[SiO₂]ₚ (mit m, n, o, p als ganze Zahl ≥ 0) verstanden, wobei für R die unten aufgeführte Definition gilt. Ein lineares Organosiloxan weist beispielsweise die allgemeine Formel R₃Si-[O-SiR₂]ₙ-O-SiR₃ auf. Es gilt, dass ein Organosiloxan mindestens eine Si-C-Bindung aufweist, d.h. mindestens ein Rest muss organischer Natur sein.
Erfindungsgemäß können auch Gemische verschiedener Organosiloxane, vorzugsweise flüssiger Organosiloxane eingesetzt werden. Bevorzugt wird als Organosiloxan ein Disiloxan der Formel R₃Si-O-SiR₃, wobei R gleich oder verschieden sein kann und Wasserstoff oder ein organischer, substituierter oder unsubstituierter Rest ist, eingesetzt.
Disiloxane sind chemische Verbindungen mit der Formel R₃Si-O-SiR₃ oder [R¹R²R³SiO_{1/2}]₂, wobei wiederum für R oder R¹, R² und R³ die oben gegebene Definition gilt und das Disiloxan mindestens eine Si-C-Bindung aufweist. Es werden bevorzugt symmetrische Disiloxane, insbesondere bevorzugt Hexamethyldisiloxan eingesetzt. Es können auch Mischungen verschiedener Disiloxane, insbesondere Mischungen aus Hexamethyldisiloxan und Divinyltetramethyldisiloxan eingesetzt werden. Bei der Oberflächenmodifizierung reagieren die freien und zugänglichen Silanolgruppen des silikatischen Lyogels mit dem Silylierungsmittel. In einer bevorzugten Ausführungsform entstehen dabei aus Si-OH Gruppen Si-O-SiR₃ Gruppen.

Die Reste R können gleich oder verschieden sein und unabhängig voneinander, Wasserstoff, ein organischer, linearer, verzweigter, cyclischer, gesättigter oder ungesättigter, aromatischer oder heteroaromatischer Rest, mit oder ohne Substituenten. Das bedeutet, dass die Reste R substituiert oder unsubstituiert sein können. Bevorzugte Substituenten sind -CN, -NCO, -NR₂,-COOH, -COOR, -Halogen, -(Meth)acryl, -Epoxy, -SH, -OH, -CONR₂,-O-R, -CO-R, -COO-R, -OCO-R, oder -OCOO-R, -S-R, -NR-, -N=R,-N=N-R, oder -P=R. Vorzugsweise werden gesättigte oder ungesättigte Reste mit C₁-C₄-, besonders bevorzugt C₁-C₄-Alkyl, Vinyl, insbesondere Methyl oder Ethyl, im speziellen Methyl eingesetzt.

Die für die eigentliche Silylierungsreaktion notwendigen Silylierungsmittel können auch aus anderen Substanzen, vorzugsweise anderen Silylierungsmitteln, generiert werden, die z.B. nach dem Fachmann bekannten Reaktionen und Mechanismen (Journal of non-Crystalline Solids (Vol. 225, S. 24-29, 1998), EP 0 948 395 B), z.B. durch Spaltung des Organosiloxans im Sauren, insbesondere durch Spaltung von HMDSO in Salzsäure erfolgen kann.
Der Anteil an Organosiloxan, bevorzugt Disiloxan, im Silylierungsmittel liegt erfindungsgemäß bei mindestens 20 Gew.-%, bevorzugt mindestens 50 Gew.-%, besonders bevorzugt mindestens 90 Gew.-% und insbesondere bevorzugt mindestens 95 Gew.-%. In einer speziell bevorzugten Ausführungsform liegt der Anteil an Organosiloxan im Gemisch bei mindestens 98 Gew.-%, d.h. es wird handelsüblich konzentriertes Organosiloxan, bevorzugt Disiloxan, besonders bevorzugt Hexamethyldisiloxan verwendet.

Während und/oder nach der Zugabe des Sols erfolgt eine Formgebung der Sol-Tropfen bzw. der entstehenden Gelpartikel durch dem Fachmann bekannte Methoden (beispielsweise Emulgieren, Dispergieren, Versprühen), bevorzugt durch Dispergieren, insbesondere bevorzugt durch Emulgieren. Dispergieren bedeutet, dass das flüssige Sol durch Rühren in einer kontinuierlichen Phase (Dispersionsmedium) verteilt wird und in dieser die Soltröpfchen in Geltröpfchen überführt werden.

In Schritt ii (Dispergierschritt) können gegebenenfalls Hilfsstoffe anwesend sein, die z.B. die Soltröpfchen stabilisieren oder auch die Tröpfchengröße beeinflussen können. Als Hilfsstoffe werden bevorzugt grenzflächenaktive Substanzen eingesetzt, die z.B. als Emulgatoren oder Entschäumer wirken können. Grenzflächenaktiv nennt man organische Verbindungen, die sich dank ihrer Struktur an der Grenzfläche zwischen zwei Phasen so anordnen, dass sie die Grenzflächenspannung (=Oberflächenspannung) erniedrigen und dadurch z.B. Benetzung ermöglichen. Durch Herabsetzen der Oberflächenspannung fördern sie die Durchmischung von zwei Phasen unter Umständen bis zur Bildung einer Emulsion. Je nach ihrer chemischen Zusammensetzung und Anwendung werden grenzflächenaktive Substanzen als Netzmittel, Detergenzien (Tenside, Seife) oder Emulgatoren bezeichnet.
Die Stoffe enthalten im Allgemeinen je eine Wasser stark anziehende hydrophile ("wasserfreundliche") Gruppe und eine lipophile ("fettfreundliche"), Wassermoleküle nur schwach anziehende (hydrophobe) Kohlenwasserstoffgruppe. Typischerweise können alle dem Fachmann bekannten Tenside eingesetzt werden. Vorzugsweise werden nichtionische, kationische oder anionische Tenside oder Gemische der selbigen eingesetzt. Die Hilfsstoffe können dabei zum Sol und/oder zur kontinuierlichen Phase gegeben werden.

Im 3. Schritt (iii) des Verfahrens wird aus dem Sol in der kontinuierlichen Phase ein Gel gebildet. Die Gelbildung erfolgt nach dem Fachmann bekannten Methoden wie pH-Wert-Erhöhung und/oder Temperaturerhöhung. Die Gelbildung kann dabei vor, während oder nach der Zugabe des Sols in die kontinuierliche Phase erfolgen. Falls eine Base zum Start der Gelbildung verwendet wird, kann diese in das Sol und/oder in die kontinuierliche Phase gegeben werden.

In einer bevorzugten Ausführungsform wird das Sol unter Rühren mit einer Base, bevorzugt Ammoniak versetzt und innerhalb kurzer Zeit, bevorzugt innerhalb 10 Minuten, besonders bevorzugt innerhalb einer Minute wiederum unter Rühren in das Organosiloxan überführt (s. erfindungsgemäße Beispiele 1 und 3). Die Gelbildungszeit kann je nach pH-Wert und Temperatur wenige Sekunden bis zu mehreren Stunden dauern. Es ist vorteilhaft, die Gelbildungszeit so einzustellen, dass das Sol bei der Zugabe zum Silylierungsmittel noch flüssig ist, so dass das Sol noch einfach gefördert werden kann und eine kontrollierte Formgebung möglich ist. Es ist vorteilhaft, die Base erst unmittelbar vor dem Dispergieren des Sols durch geeignete, dem Fachmann bekannte Mischapparaturen, insbesondere solche mit kurzen Verweilzeiten wie statische Mischer, zuzugeben. Die Base kann auch bereits in der kontinuierlichen Phase enthalten sein (Beispiel 2). Durch eine temperaturinduzierte Gelbildung kann auf die Zugabe eine Base auch verzichtet werden. Dabei ist es vorteilhaft die kontinuierliche Phase zu erwärmen. Das Dispergieren des Sols kann in dem Fachmann bekannten Apparaturen (z.B. Rührkessel, Rohrreaktoren) erfolgen. Die Form und Größe der entstehenden Gel-Partikel kann dabei über Parameter wie Rührerdrehzahl, Rührer- und/oder Reaktorgeometrie und dem Verhältnis zwischen Sol und Silylierungsmittel beeinflusst werden. Das Verhältnis kontinuierliche Phase/Sol (Volumen kontinuierliche Phase / Volumen Sol) ist im Allgemeinen größer 1, bevorzugt zwischen 1 und 10, besonders bevorzugt zwischen 1 und 4, insbesondere bevorzugt zwischen 1 und 2.

Für die Gelbildung im Alkyoxysilan-basierten Verfahren wird für die Gelbildung bevorzugt ein pH-Wert von 7 bis 10, besonders bevorzugt zwischen 8,5 und 9,5 eingestellt. Hierzu können im allgemeinen alle dem Fachmann bekannten Basen wie NH₄OH, NaOH, KOH, Al(OH)₃, Silicate oder Siliconate eingesetzt werden, bevorzugt wird NH₄OH (Ammoniak), Wasserglas oder Alkalimetylsiliconat eingesetzt. Eine Beschleunigung der Gelbildungszeit kann auch über eine Temperaturerhöhung erreicht werden. Im Allgemeinen wird die Gelbildung bei einer Temperatur zwischen 0 °C und dem Siedepunkt der enthaltenden Lösemittel, bevorzugt zwischen 40 und 80°C, besonders bevorzugt zwischen 50 und 70 °C durchgeführt.
Sole basierend auf Wasserglas als [SiO_{4/2}]-Ausgangsstoff werden bevorzugt bei einem pH-Wert zwischen 3 und 10, insbesondere bevorzugt zwischen 4 und 7 und bei einer Temperatur zwischen dem Gefrierpunkt und dem Siedepunkt der enthaltenden Lösemittel, bevorzugt zwischen 0 und 60°C, insbesondere zwischen 0 und 30 °C, im speziellen zwischen 5 und 20 °C in ein Gel überführt.

Im Anschluss an die Gelbildung kann eine Alterung erfolgen, die ebenfalls nach bekannten Methoden wie pH-Kontrolle und Erhitzen beschleunigt werden kann. Eine Alterung im Sinne der Erfindung bedeutet, dass das Gel bei einer Temperatur im Bereich von 20 bis 100 °C, vorzugsweise bei 50 bis 70 °C und insbesondere bevorzugt bei 60 °C für 1 Sekunde bis 48 Stunden, vorzugsweise 30 min bis 24 Stunden und insbesondere bevorzugt 30 min bis 3 Stunden und einem pH-Wert von 4-11, vorzugweise 7-10 und insbesondere bevorzugt 8-9 inkubiert wird. Von dem gebildeten Gel (Lyogel) kann vor, während oder nach einer gegebenenfalls erfolgten Alterung ein Teil der kontinuierlichen Phase abgetrennt werden (z.B. durch Filtrieren, Dekantieren, Zentrifugieren, Verdampfen), um z.B. die Konzentration an Gelpartikeln in der Dispersion zu erhöhen und somit z.B. Raum-Zeit-Ausbeuten in den Folgeschritten zu erhöhen.

Das gebildete Gel (Lyogel) kann vor, während oder nach einer gegebenenfalls erfolgten Alterung mit Wasser, polaren organischen Lösemitteln oder Gemischen davon gewaschen werden, um z.B. Elektrolyte zu entfernen. Für den Folgeprozess ist es vorteilhaft, dass die Porenflüssigkeit so viel Wasser enthält, dass die Porenflüssigkeit in dem Silylierungsmittel, also in der kontinuierlichen Phase, eine separate Phase bilden kann. Es ist insbesondere vorteilhaft, auf einen Lösemittelaustausch und/oder Waschschritt komplett zu verzichten, um z.B. die Prozesskosten und -dauer zu minimieren. Daher ist es bevorzugt, dass vor Schritt iv kein Lösemittelaustausch stattfindet.

Im 4. Schritt (iv) des Verfahrens wird das erhaltene Gel in Anwesenheit eines Phasenvermittlers in der kontinuierlichen Phase oberflächenmodifiziert, wobei als Initiator Säuren oder Chlorsilane oder Gemische daraus zugegeben werden.

Unter einem Phasenvermittler wird in der vorliegenden Anmeldung eine polare Verbindung verstanden oder Gemische verschiedener dieser Verbindungen, die sowohl in der wasserreichen Phase als auch in der organischen Phase eine merkliche Löslichkeit besitzt und somit den Stofftransport zwischen den beiden im Wesentlichen nicht mischbaren Phasen beschleunigt.

Erfindungsgemäß erfolgt die Oberflächenmodifizierung in Anwesenheit eines Phasenvermittlers. Als Phasenvermittler geeignet sind polare organische Verbindungen oder Gemische davon wie
- Alkohole, insbesondere der chemischen Formel R-OH, wobei R wie oben für Reste R angegeben definiert ist (z.B. Methanol, Ethanol, Isopropanol)
- Ketone, insbesondere der chemischen Formel R¹R²C=O, wobei R¹ und R² gleich oder verschieden und wie oben für Reste R angegeben definiert sind (z.B. Aceton (CH₃)₂C=O)
- Ether, insbesondere der chemischen Formel R¹OR², wobei R¹ und R² gleich oder verschieden und wie oben für Reste R angegeben definiert sind (z.B. Diethylether, Tetrahydrofuran, Dimethoxyethan)
- Ester, insbesondere der chemischen Formel R¹COOR², wobei R¹ und R² gleich oder verschieden und wie oben für Reste R angegeben definiert sind (z.B. Ethylacetat) und
- grenzflächenaktive Substanzen wie Tenside. Für grenzflächenaktive Substanzen gilt die gegebene Definition (siehe Schritt ii) .

Besonders bevorzugt werden als Phasenvermittler Alkohole eingesetzt wie beispielsweise Methanol, Ethanol und Isopropanol, insbesondere bevorzugt wird als Phasenvermittler Ethanol verwendet.

Der Phasenvermittler kann im Sol, im Gel oder in der kontinuierlichen Phase enthalten sein. Auch Kombinationen sind möglich. Bevorzugt wird der Phasenvermittler vor der Oberflächenmodifizierung zu dem Silylierungsmittel und/oder dem Gel und/oder dem Sol gegeben. Besonders bevorzugt wird der Phasenvermittler bereits bei der Herstellung des Sols zugegeben oder aus diesem gebildet. Das bedeutet, dass bereits nach der Herstellung des Sol (Schritt i) in diesem Phasenvermittler enthalten ist. Der Phasenvermittler kann dabei vor, während oder nach der Solherstellung dem Sol zugegeben werden. Besonders bevorzugt wird der Phasenvermittler aus den Ausgangsstoffen zur Bildung der [SiO_{4/2}]-Einheiten und/oder der gegebenenfalls zugegebenen Ausgangsstoffe zur Bildung weiterer oxidischer Einheiten und/oder [RₓSiO_{(4-x)/2}] -Einheiten während der Solherstellung gebildet. Besonders bevorzugt wird als Phasenvermittler Ethanol und/oder Methanol eingesetzt, das aus der Hydrolyse der Ausgangsstoffe gebildet wird. Der Gehalt an Phasenvermittler in der Porenflüssigkeit liegt bevorzugt unter 90 Gew.-%, besonders bevorzugt unter 50 Gew.-% und insbesondere bevorzugt zwischen 5 und 30 Gew.-%.

Erfindungsgemäß dient die kontinuierliche Phase auch als Silylierungsmittel. Gegebenenfalls kann vor der Oberflächenmodifizierung ein Teil der kontinuierlichen Phase entfernt werden, um die Konzentration an Gelpartikeln im Silylierungsmittel zu erhöhen. Es kann auch weiteres Silylierungsmittel zugegeben werden, um die Konzentration an Gelpartikeln zu verringern, um z.B. das Gemisch besser mischen oder befördern zu können. Bevorzugt wird je ml Lyogel mindestens 1 ml, besonders bevorzugt 1-4 ml, insbesondere bevorzugt 1-2 ml Silylierungsmittel eingesetzt.

Durch die bevorzugte Ausführungsform lässt sich der Gesamtprozess gegenüber dem Stand der Technik deutlich verbessern, da die Reaktionsprozesse, insbesondere die Oberflächenmodifizierung, aufgrund der kleineren Größe der Gel-Partikel und der guten Durchmischung beschleunigt werden. Des Weiteren können Emulsionen bzw. Dispersionen sehr einfach gefördert werden, die Partikelgrößen können einfach eingestellt werden, und es ist kein zusätzlicher Zerkleinerungsschritt für die Gele notwendig. Dies vereinfacht eine großtechnische Produktion, weil dadurch eine kontinuierliche oder semikontinuierliche Prozessführung ermöglicht wird. In einer speziell bevorzugten Ausführungsform wird als kontinuierliche Phase technisch reines Organosiloxan, bevorzugt Disiloxan, besonders bevorzugt Hexamethyldisiloxan, eingesetzt. Dies ist besonders vorteilhaft, da dadurch keine aufwändige Trennung und Aufbereitung von Stoffgemischen erforderlich ist und das Organosiloxan nach der Reaktion direkt wiederverwendet werden kann.

Bei der Oberflächenmodifizierung (Schritt iv) liegt die Temperatur bevorzugt zwischen Raumtemperatur und dem Siedepunkt des Gemisches, bevorzugt zwischen 40 und 80 °C, besonders bevorzugt zwischen 50 und 70 °C und insbesondere bevorzugt zwischen 55 und 65 °C.

Die Dauer der Oberflächenmodifizierung (Schritt iv) liegt bevorzugt unter 5 Stunden, besonders bevorzugt unter 2 Stunden und insbesondere bevorzugt unter 30 min.

Unter den Reaktionsbedingungen, die bei der Gelbildung (Schritt iii) und einer gegebenenfalls anschließend durchgeführten Alterung herrschen, findet in dem Silylierungsmittel im Allgemeinen keine oder nur sehr langsame Oberflächenmodifizierung statt, da die Organosiloxane, insbesondere Disiloxane, unter diesen Bedingungen nicht bzw. nur sehr langsam silylieren. Organosiloxane, bevorzugt Disiloxane, können durch Zugabe von Säuren oder Säurelieferanten wie Chlorsilane gezielt initiiert werden. Der Begriff Initiator im Sinne dieser Erfindung ist also eine Säure oder ein Chlorsilan oder Gemische daraus, der die Oberflächenmodifizierung beschleunigt. Das ermöglicht eine bessere Prozesssteuerung. Dies ist ein wesentlicher Vorteil des erfindungsgemäßen Verfahrens gegenüber dem im Stand der Technik meist genutzten Gemisch aus Kohlenwasserstoffen und Trimethylchlorsilan. Erfindungsgemäß wird die Oberflächenmodifizierung durch Zugabe von Säuren und/oder Chlorsilanen durch die bereits beschriebenen, dem Fachmann bekannten Reaktionen und Mechanismen, initiiert. Besonders bevorzugt besteht der Initiator aus Salzsäure oder Trimethylchlorsilan (TMSC) oder Gemischen daraus. Insbesondere bevorzugt wird konzentrierte Salzsäure verwendet.

Das TMCS wirkt dabei als Silylierungsmittel, reagiert mit den Silanol-Gruppen der Geloberfläche und führt dadurch zu einer starken Hydrophobierung des Gerüsts. Um den Stofftransport und damit auch die Oberflächenmodifizierung zu beschleunigen, ist es vorteilhaft während der Oberflächenmodifizierung für eine gute Durchmischung zu sorgen. Daher ist es besonders vorteilshaft die Oberflächenmodifizierung in Dispersion durchzuführen.

Vergleichsbeispiel 4 zeigt, dass die Oberflächenmodifizierung von nachträglich zerkleinerten Gelstücken, also Oberflächenmodifizierung ohne Dispergieren, unter der Verwendung einer erfindungsgemäß niedrigen Temperatur und geringen Menge an Initiator, im Vergleich zum erfindungsgemäßen Beispiel 1 eine mindestens um den Faktor 2 längere Silylierungsdauer erfordert. Aufgrund der niedrigen Feststoffgehalte im Sol sind bei der Herstellung von Aerogelen im Allgemeinen sehr hohe Stoffvolumen umzusetzen. Die Minimierung der Raum-Zeit-Ausbeute ist bei der Entwicklung eines wirtschaftlichen Verfahrens daher neben der Minimierung der Initiator-Menge entscheidend. So kann durch eine Beschleunigung der Oberflächenmodifizierung um den Faktor 2 der Durchsatz um 100 Prozent gesteigert werden, was zu einer signifikanten Prozesskostenreduktion führt.

In einer Nebenreaktion kann das aktive Silylierungmittel auch mit dem Wasser der Porenflüssigkeit zu dem entsprechenden Organosiloxan, bevorzugt Disiloxan, reagieren. Daher ist es vorteilhaft, die Oberflächenmodifizierung in Organosiloxanen, bevorzugt Disiloxanen, bzw. in einer möglichst konzentrierten Organosiloxan-Lösung durchzuführen, da dadurch eine ausreichend hohe Konzentration an aktivem Silylierungmittel, durch die bereits beschriebene Rückreaktion mit Säure, erhalten bleibt. Darüber hinaus wird durch die Vermeidung eines weiteren Lösemittels, wie Hexan, ein einfaches und damit wirtschaftliches Stoffrecycling ermöglicht, da lediglich die wässrige Phase und die Organosiloxan-, bevorzugt Disiloxan-, Phase getrennt werden müssen. Dies kann nach dem Fachmann bekannten Methoden zur Trennung von organischen und wässrigen Phasen erfolgen (z.B. Absetzbecken, Zentrifuge, Dekanter, Destillation,...). Es ist daher eine besonders bevorzugte Ausführungsform, als Silylierungsmittel ein Gemisch aus Organosiloxan, bevorzugt Disiloxan, und Initiator einzusetzen und auf die Zugabe eines weiteren Lösemittels zu verzichten.

Während der Hydrophobierung wird die polare, wasserhaltige Porenflüssigkeit aus dem Gel verdrängt und durch das Organosiloxan bzw. durch die Organosiloxan-reiche organische Phase, bevorzugt Disiloxan, insbesondere bevorzugt durch HMDSO ersetzt. Da die wässrige Porenflüssigkeit mit der Organosiloxan-reichen Phase im Wesentlichen nicht mischbar ist, bildet sich während der Oberflächenmodifizierung eine zweite, wässrige, flüssige Phase. Da die wässrige Phase bevorzugt eine höhere Dichte als die Organosiloxan-reiche Phase besitzt und die Gelpartikel bevorzugt in der organischen Phase enthalten sind, ermöglicht das erfindungsgemäße Verfahren eine einfache und ressourcenschonende Stofftrennung. Dies ist insbesondere für eine großtechnische Umsetzung von besonderer Bedeutung. Über die Bestimmung der Menge an verdrängter Porenflüssigkeit kann zudem der Reaktionsverlauf verfolgt werden.
Da polare Flüssigkeiten, insbesondere Wasser, in [SiO_{4/2}]-Gelen aufgrund der hohen Hydrophilie und den geringen Porendurchmessern des Netzwerkes sehr stark gebunden sind und die Verträglichkeit bzw. Mischbarkeit von Wasser und HMDSO sehr gering ist, ist das bereits erwähnte Verfahren von Schwertfeger (EP 0 948 395 B1) auf hohe Prozesstemperaturen und/oder hohe Mengen an HCl und/oder TMCS angewiesen. Um die Prozesskosten zu minimieren, ist es vorteilhaft den Einsatz an Säure und/oder Chlorsilan zu minimieren. Überraschenderweise ist es durch den Einsatz von Phasenvermittlern in Kombination mit der starken Durchmischung in Form einer Dispersion der Gelpartikel in einer Organosiloxan-reichen kontinuierlichen Phase gelungen, die Oberflächenmodifizierung von Lyogelen auch bei niedrigeren Temperaturen und mit deutlich geringeren Mengen an Initiatoren wie HCl und TMCS in prozesstechnisch sinnvollen Zeiten von wenigen Stunden durchzuführen.
Bevorzugt werden höchstens 20 g, besonders bevorzugt höchstens 10 g und insbesondere bevorzugt höchstens 5 g Initiator pro 100 g Gel eingesetzt.

In den Beispielen konnte gezeigt werden, dass die Oberflächenmodifizierung sowohl durch TMCS (Beispiel 2), als auch durch HCl (Beispiel 1 und 3) gestartet werden kann.
Beispiel 1 verglichen mit Beispiel 2 verglichen mit Vergleichsbeispiel 3 zeigt, dass bei der Anwendung einer nichterfindungsgemäßen kontinuierlichen Phase, das heißt einer kontinuierlichen Phase mit weniger als 20 Gew.-% Organosiloxan, unter der Verwendung einer erfindungsgemäß niedrigen Temperatur und geringen Menge an Initiator selbst nach 19 Stunden die Silyierungsreaktion noch nicht abgeschlossen war, was daran zu erkennen ist, dass die wässrige Porenflüssigkeit nicht verdrängt wird und sich daher keine separate Wasserphase bildet.

Erfindungsgemäß beträgt die Zeit für den Prozess der Oberflächenmodifizierung und Lösemittelverdrängung bevorzugt weniger als 12 Stunden, weiter bevorzugt zwischen 15 Minuten und 3 Stunden, insbesondere bevorzugt zwischen 15 Minuten und 2 Stunden. Die Oberflächenmodifizierung wird im Allgemeinen zwischen Raumtemperatur und dem Siedepunkt des Silylierungsmittels bzw. der Porenflüssigkeit durchgeführt. Die Reaktion wird bevorzugt zwischen 40 und 90 °C, besonders bevorzugt zwischen 50 und 80 °C, insbesondere Bevorzugt zwischen 50 und 70 °C durchgeführt.

Beispiel 1 und 3 verglichen mit Vergleichsbeispielen 1 und 2 zeigen, dass ohne die erfindungsgemäße Verwendung von Phasenvermittlern unter der Anwendung der erfindungsgemäß niedrigen Reaktionstemperatur und geringen Menge an Initiator selbst nach 19 bzw. 24 Stunden keine Wasserverdrängung und damit keine Oberflächenmodofizierung stattfindet.
Es ist vorteilhaft, die Gelpartikel nach der Oberflächenmodifizierung von der wässrigen Phase und dem überschüssigen Silylierungsmittel abzutrennen. In den erfindungsgemäßen Beispielen wird dies mittels Filtration durchgeführt. Die Stofftrennung kann über alle dem Fachmann bekannten Methoden zur Fest-Flüssig- und/oder Flüssig-Flüssig-Trennung durchgeführt werden (z.B. Dekanter, Absitzbecken, Zentrifugen, Wasserabscheider, Destillation,...). Das Gel bzw. das Reaktionsgemisch kann vor, während oder nach der Abtrennung mit Lösemitteln gewaschen und/oder extrahiert werden. Es ist besonders vorteilhaft, das Reaktionsgemisch mit Wasser zu waschen, um die Elektrolyte zu entfernen.

Im nächsten Schritt des erfindungsgemäßen Verfahrens (v) wird das oberflächenmodifizierte und gegebenenfalls gewaschene Gel getrocknet. Im erfindungsgemäßen Beispiel wird das Gel in einem Vakuumtrockenschrank bei 0,01 bar und 80 °C bis zur Gewichtskonstanz getrocknet. Im Allgemeinen kann die Trocknung sowohl im überkritischen Bereich als auch im unterkritischen Bereich erfolgen. Bevorzugt findet eine Trocknung unterhalb des kritischen Punktes statt, vorzugsweise bei Temperaturen von -30 bis 200 °C, besonders bevorzugt 0 bis 150 °C, sowie bei Drücken vorzugsweise von 0,001 bis 20 bar, besonders bevorzugt 0,01 bis 5 bar, insbesondere 0,01 bis 2 bar. Die Trocknung kann dabei durch Strahlungs-, Konvektions- und/oder Kontakttrocknung erfolgen. Die Trocknung wird vorzugsweise so lange durchgeführt, bis das Gel einen Lösungsmittel-Restgehalt von weniger als 0,1 Gew.-% aufweist.

Vor, während oder nach der Trocknung, bevorzugt während oder nach der Trocknung, kann gegebenenfalls eine Agglomeration der Gele zu größeren Partikeln erfolgen. Dies kann beispielsweise nach bekannten Verfahren erfolgen (s. z.B. US 6,481,649 B1 und US 6,620,355 B1).

Die vorliegende Erfindung stellt ein kostengünstiges, einfaches, in der Handhabung sicheres und ressourcenschonendes und somit wirtschaftliches Verfahren zur Herstellung organisch modifizierter Aerogele zur Verfügung. Das erfindungsgemäße Verfahren zeichnet sich besonders durch die Kombination der Vorteile eines schnellen Reaktionsverlaufs, Verwendung geringer Mengen Initiator bei milden Temperaturbedingungen aus. Die Gelherstellung und Oberflächenmodifizierung in Dispersion stellt ein Verfahren zur Verfügung, das aufgrund eines besonders effizienten Stoffrecyclings, schnellem Stofftransport und schnellen Reaktionsschritten die Realisierung eines kontinuierlichen, großtechnischen Prozesses ermöglicht. Die einzelnen Vorteile wurden oben bereits detailliert diskutiert.

Die nach dem erfindungsgemäßen Verfahren herstellbaren Aerogele sind hydrophob. Die Dichte der Aerogele liegt bevorzugt im Bereich von 0,05 bis 0,3 g/cm³, besonders bevorzugt im Bereich von 0,08 bis 0,2 g/cm³, insbesondere bevorzugt im Bereich von 0,09 und 0,15 g/cm³. Die Oberfläche der Aerogele, ermittelt mit der BET-Methode, liegt bevorzugt im Bereich zwischen 300 und 1000 m²/g, besonders bevorzugt zwischen 500 und 900 m²/g, insbesondere zwischen 600 und 800 m²/g. Die erfindungsgemäß hergestellten Aerogele zeichnen sich durch ein BJH-Porenvolumen von bevorzugt mindestens 2,0 cm³/g, besonders bevorzugt mindestens 3,0 cm³/g, insbesondere bevorzugt mindestens 4,0 cm³/g aus. Die erfindungsgemäß hergestellten Aerogele besitzen eine geringe Wärmeleitfähigkeit. Diese liegt bei einer Messtemperatur von 20 °C, vorzugsweise bei weniger als 0,02 W/mK, besonders bevorzugt bei weniger als 0,015 W/mK und insbesondere bei weniger als 0,01 W/mK.

Die erfindungsgemäß hergestellten Aerogele werden bevorzugt für Isolierungsanwendungen eingesetzt, besonders bevorzugt in der thermischen Isolierung und insbesondere bevorzugt als Wärmedämmstoff.

Das erfindungsgemäße Verfahren zur Herstellung von Aerogelen wird im folgenden anhand von Ausführungsbeispielen näher beschrieben, ohne dadurch beschränkt zu werden.

### Analysemethoden:

### Bestimmung der Schüttdichte

Die Schüttdichte wurde in Anlehnung an DIN 53468 ermittelt, indem das Aerogelpulver ohne weitere Verdichtung in ein zylindrisches Gefäß bekannten Volumens (50 cm³) geschüttet und anschließend das Gewicht des Aerogelpulvers über Wiegen ermittelt wurde.

### Bestimmung der BET-Oberfläche

Die spezifische Oberfläche der Aerogele wurde bestimmt nach der BET-Methode entsprechend DIN 9277/66131 und 9277/66132).

### Bestimmung des BJH-Porenvolumens und der Porengröße

Die Porenanalyse wurde nach der Methode von Barett Joyner und Halenda (BJH, 1951) entsprechend DIN 66134 durchgeführt. Für die Auswertung wurden die Daten der Desorptionsisotherme genutzt.

### Bestimmung der Ausbeute

Zur Bestimmung der Ausbeute wurden die Gelpartikel bis zur Gewichtskonstanz getrocknet und anschließend bei Raumtemperatur gewogen.

### Bestimmung des pH-Werts

Der pH-Wert wurde mit einem pH-Meter der Firma Mettler Toledo Seven Multi; Elektrode: In Lab Science) ermittelt.

### Beispiele

### Bezugsquellen gültig für alle Beispiele:

Tetraethylorthosilikat (WACKER® TES28 der Wacker Chemie AG), Wasserglas (Sigma-Aldrich: SiO₂-Gehalt: 26,5 Gew.-%, Na₂O-Gehalt: 10,6 Gew.-%), Hexamethyldisiloxan (WACKER® AK 0,65 SI-LICONOEL der Wacker Chemie AG), Trimethylchlorsilan (SILAN M3 der Wacker Chemie AG).

Alle weiteren Laborchemikalien wurden von Sigma-Aldrich bezogen.

### Beispiel 1:

In einem Rundkolben wurden 210 ml Wasser und 1,0 ml einer 1 M Salzsäure vorgelegt und auf 50 °C erhitzt. Unter intensivem Rühren wurden 104 g TEOS zugegeben und für eine Stunde bei 50 °C gerührt.

In einem zweiten Kolben wurden 700 ml Hexamethyldisiloxan auf 60 °C erhitzt und intensiv gerührt.

Das Sol wurde unter intensivem Rühren mit 12,5 ml einer 0,25 M Ammoniaklösung versetzt und innerhalb einer Minute in den zweiten Rundkolben mit dem HMDSO überführt. Das Reaktionsgemisch wurde für 3 Stunden bei 60 °C gerührt. Anschließend wurden unter Rühren 30 g konzentrierte Salzsäure (entspricht 9,1 g Salzsäure je 100 g Gel) zugegeben und das Reaktionsgemisch bei 60 °C gerührt. Alle 15 Minuten wurde der Rührer gestoppt, die Phasenseparation abgewartet (1 Minute) und das Volumen der verdrängten, wässrigen Phase (untere Phase) markiert. Nach 90 Minuten war die Verdrängung der wässrigen Porenflüssigkeit abgeschlossen, d.h. das Volumen der wässrigen Phase war maximal und hat sich nicht mehr geändert.

Die Gelpartikel wurden anschließend durch Filtration mittels eines Büchner-Trichters (Whatman® Filter, 125 mm, Grade 40) abgetrennt.

Die Gelpartikel wurden schließlich in einem Vakuumtrockenschrank getrocknet (10 mbar, 120 °C). Die folgenden Werte wurden wie in den Analysemethoden beschrieben, bestimmt.
Schüttdichte: 0,07 g/cm³
BET: 748 m²/g
BJH-Porenvolumen: 4,3 cm³/g
Mittlerer Porendurchmesser: 17 nm

### Beispiel 2:

In einem Becherglas wurden 150 g Wasser und 150 g Wasserglas (Aldrich: SiO₂-Gehalt: 26,5 Gew.-%, Na₂O-Gehalt: 10,6 Gew.-%) gemischt und in einem Eisbad auf 10 °C gekühlt.

In einem zweiten Becherglas wurden 100 g Salzsäure (7,5 Gew.-%) vorgelegt, in einem Eisbad auf 10 °C gekühlt und mit einem Magnetrührer bei 500 UpM gerührt.

Die gekühlte Wasserglas-Lösung wurde über einen Tropftrichter langsam unter Rühren zu der Salzsäurelösung gegeben. Bei der Dosierung wurde darauf geachtet, dass die Temperatur nicht über 10 °C steigt. Bei einem pH-Wert von 3,2 wurde die Zugabe gestoppt und 22 g Ethanol als Phasenvermittler zugegeben.

Das flüssige Sol wurde anschließend unter intensivem Rühren (KPG-Rührer, 700 UpM) in ein Gemisch aus 550 ml Hexamethyldisiloxan enthaltend 1,0 g der Wasserglaslösung als Base überführt und für 3 Stunden bei 60 °C gerührt. Anschließend wurde die Dispersion auf 80 °C erhitzt und unter Rühren mit 23 g Trimethylchlorsilan (entspricht 10 g TMCS je 100 g Gel) versetzt und bei 70 °C weitergerührt. Alle 15 Minuten wurde der Rührer gestoppt, die Phasenseparation abgewartet (1 Minute) und das Volumen der verdrängten, wässrigen Phase markiert. Nach 120 Minuten war die Verdrängung der wässrigen Porenflüssigkeit abgeschlossen. Die Gelpartikel wurden anschließend mittels Filtration über einen Büchner Trichter (Whatman® Filter, 125 mm, Grade 40) abgetrennt und in einem Vakuumtrockenschrank bei vermindertem Druck bis zur Gewichtskonstanz getrocknet (10 mbar, 120 °C).
Schüttdichte: 0,10 g/cm³
BET: 500 m²/g
BJH-Porenvolumen: 3,2 cm³/g
Mittlerer Porendurchmesser: 22 nm

### Beispiel 3:

In einem Rundkolben wurden 210 ml Wasser und 1,0 ml einer 1 M Salzsäure vorgelegt und auf 50 °C erhitzt. Unter intensivem Rühren wurden 104 g TEOS zugegeben und für eine Stunde bei 50 °C gerührt.

In einem zweiten Kolben wurden 700 ml einer HMDSO-Lösung (50 Gew.-%) in n-Hexan auf 60 °C erhitzt und intensiv gerührt.

Das Sol wurde unter intensivem Rühren mit 12,5 ml einer 0,25 M Ammoniaklösung versetzt und innerhalb einer Minute in den zweiten Rundkolben mit der HMDSO-Lösung überführt. Das Reaktionsgemisch wurde für 3 Stunden bei 60 °C gerührt. Anschließend wurden unter Rühren 30 g konzentrierte Salzsäure (entspricht 9,1 g Salzsäure je 100 g Gel) zugegeben und das Reaktionsgemisch bei 60 °C gerührt. Alle 15 Minuten wurde der Rührer gestoppt, die Phasenseparation abgewartet (1 Minute) und das Volumen der verdrängten, wässrigen Phase markiert. Nach 3 Stunden war die Verdrängung der wässrigen Porenflüssigkeit abgeschlossen.

Die Gelpartikel wurden anschließend durch Filtration mittels eines Büchner-Trichters (Whatman® Filter, 125 mm, Grade 40) abgetrennt. Die Gelpartikel wurden schließlich in einem Vakuumtrockenschrank getrocknet (10 mbar, 120 °C). Die folgenden Werte wurden wie in den Analysemethoden beschrieben, bestimmt.
Schüttdichte: 0,08 g/cm³
BET: 760 m²/g
BJH-Porenvolumen: 4,0 cm³/g
Mittlerer Porendurchmesser: 17 nm

### Vergleichsbeispiel 1:

In einem Rundkolben wurden 210 ml Wasser und 1,0 ml einer 1 M Salzsäure vorgelegt und auf 50 °C erhitzt. Unter intensivem Rühren wurden 104 g TEOS zugegeben und für eine Stunde bei 50 °C gerührt.

In einem zweiten Kolben wurden 700 ml Hexamethyldisiloxan auf 60 °C erhitzt und intensiv gerührt.

Das Sol wurde unter intensivem Rühren mit 12,5 ml einer 0,25 M Ammoniaklösung versetzt und innerhalb einer Minute in den zweiten Rundkolben mit dem HMDSO überführt. Das Reaktionsgemisch wurde für 3 Stunden bei 60 °C gerührt. Die Gelpartikel wurden anschließend durch Filtration mittels eines Büchner-Trichters (Whatman® Filter, 125 mm, Grade 40) abgetrennt. Zur Entfernung des Ethanols wurden die Gelstücke fünfmal für jeweils 24 Stunden in 60 °C heißem, destilliertem Wasser inkubiert (300 ml Wasser je 100 g Gel). Das Wasser wurde dabei nach jeweils 12 Stunden durch Dekantieren abgetrennt und anschließend durch frisches Wasser ersetzt. Anschließend wurden die Gelpartikel in 700 ml Hexamethyldisiloxan dispergiert, auf 60 °C erhitzt und unter Rühren mit 30 g konzentrierter Salzsäure (entspricht 9,1 g Salzsäure je 100 g Gel) versetzt. Alle 15 Minuten wurde der Rührer gestoppt, die Phasenseparation abgewartet (1 Minute) und das Volumen der verdrängten, wässrigen Phase markiert. Nach 3 Stunden war keine separate Wasserphase erkennbar. Das Reaktionsgemisch wurde für weitere 16 Stunden bei 60 °C gerührt, wobei auch nach dieser Zeit keine separate Wasserphase erkennbar war, d.h. es fand keine Silylierung statt.

### Vergleichsbeispiel 2:

Die Durchführung erfolgte wie Beispiel 2, wobei auf die Zugabe des Phasenvermittlers (Ethanol) in das Sol verzichtet wurde. Selbst nach 24 Stunden war keine separate Wasserphase erkennbar.

### Vergleichsbeispiel 3:

In einem Rundkolben wurden 210 ml Wasser und 1,0 ml einer 1 M Salzsäure vorgelegt und auf 50 °C erhitzt. Unter intensivem Rühren wurden 104 g TEOS zugegeben und für eine Stunde bei 50 °C gerührt.

In einem zweiten Kolben wurden 700 ml n-Hexan auf 60 °C erhitzt und intensiv gerührt.

Das Sol wurde unter intensivem Rühren mit 12,5 ml einer 0,25 M Ammoniaklösung versetzt und innerhalb einer Minute in den zweiten Rundkolben mit dem n-Hexan überführt. Das Reaktionsgemisch wurde für 3 Stunden bei 60 °C gerührt. Anschließend wurden unter Rühren 30 g konzentrierte Salzsäure (entspricht 9,1 g Salzsäure je 100 g Gel) zugegeben und das Reaktionsgemisch bei 60 °C gerührt. Alle 15 Minuten wurde der Rührer gestoppt, die Phasenseparation abgewartet (1 Minute) und das Volumen der verdrängten, wässrigen Phase markiert. Nach 3 Stunden war keine separate Wasserphase erkennbar. Das Reaktionsgemisch wurde für weitere 16 Stunden bei 60 °C gerührt, wobei auch nach dieser Zeit keine separate Wasserphase erkennbar war.

### Vergleichsbeispiel 4:

In einem Schraubdeckelglas wurden 210 ml Wasser und 1,0 ml einer 1 M Salzsäure vorgelegt und auf 50 °C erhitzt. Unter intensivem Rühren (Magnetrührer 500 UpM) wurden 104 g TEOS zugegeben und für eine Stunde bei 50 °C gerührt. Anschließend wurden 12,5 ml einer 0,25 M Ammoniaklösung zugegeben, eine Minute nachgerührt und schließlich der Rührer entfernt. Das erhaltene Gel wurde in einem geschlossenen Gefäß für 3 Stunden bei 60 °C in einem Trockenschrank gelagert. Anschließend wurde das Gel durch ein Sieb mit einer Maschenweite von 5 mm gedrückt, um Stücke kleiner 5 mm zu erhalten. Die Gelstücke wurden zusammen mit 700 ml Hexamethyldisiloxan in eine Schraubflasche gefüllt und auf 60 °C erwärmt. Anschließend wurden 30 g konzentrierte Salzsäure (entspricht 9,1 g Salzsäure je 100 g Gel) zugegeben, geschüttelt und alle 15 Minuten das Volumen der verdrängten, wässrigen Phase markiert. Erst nach 1,5 Stunden konnte eine separate Wasserphase identifiziert werde. Die Verdrängung der Porenflüssigkeit war nach 4 Stunden abgeschlossen.

## Patentansprüche

1. Verfahren zur Herstellung organisch modifizierter Aerogele, indem
i. ein Sol enthaltend [SiO_{4/2}]-Einheiten hergestellt wird,
ii. das erhaltene Sol in einer kontinuierlichen Phase dispergiert wird, wobei das Sol eine separate Phase bildet und die kontinuierliche Phase mindestens 20 Gew.-% Organosiloxan enthält,
iii. aus dem Sol in der kontinuierlichen Phase ein Gel gebildet wird,
iv. das erhaltene Gel in Anwesenheit eines Phasenvermittlers in der kontinuierlichen Phase oberflächenmodifiziert wird, wobei als Initiator Säuren oder Chlorsilane oder Gemische daraus zugegeben werden
v. und die erhaltenen Gele getrocknet werden.

2. Verfahren nach Anspruch 1, **dadurch gekennzeichnet, dass** als Organosiloxan ein Disiloxan der Formel R₃Si-O-SiR₃, wobei R gleich oder verschieden sein kann und Wasserstoff oder ein organischer, substituierter oder unsubstituierter Rest ist, eingesetzt wird.

3. Verfahren nach einem oder mehreren der Ansprüche 1 bis 2, **dadurch gekennzeichnet, dass** der Phasenvermittler bereits bei der Herstellung des Sols zugegeben oder aus diesem gebildet wird.

4. Verfahren nach einem oder mehreren der Ansprüche 1 bis 3, **dadurch gekennzeichnet, dass** als Phasenvermittler Alkohole eingesetzt werden.

5. Verfahren nach einem oder mehreren der Ansprüche 1 bis 4, **dadurch gekennzeichnet, dass** Schritt iv ohne vorhergehenden Lösemittelaustausch stattfindet.

6. Verfahren nach einem oder mehreren der Ansprüche 1 bis 5, **dadurch gekennzeichnet, dass** der Initiator aus Trimethylchlorsilan oder Salzsäure oder Gemischen daraus besteht.

7. Verfahren nach einem oder mehreren der Ansprüche 2 bis 6, **dadurch gekennzeichnet, dass** als Disiloxan Hexamethyldisiloxan eingesetzt wird.

8. Verfahren nach einem oder mehreren der Ansprüche 4 bis 7, **dadurch gekennzeichnet, dass** als Phasenvermittler Ethanol verwendet wird.

9. Verfahren nach einem oder mehreren der Ansprüche 1 bis 8, **dadurch gekennzeichnet, dass** höchstens 20 g Initiator pro 100 g Gel eingesetzt werden.

10. Verfahren nach einem oder mehreren der Ansprüche 1 bis 9, **dadurch gekennzeichnet, dass** die Temperatur bei der Oberflächenmodifizierung (Schritt iv) zwischen 40 und 80 °C liegt.

11. Verfahren nach einem oder mehreren der Ansprüche 1 bis 10, **dadurch gekennzeichnet, dass** die Dauer der Oberflächenmodifizierung (Schritt iv) unter 5 Stunden liegt.

12. Verfahren nach einem oder mehreren der Ansprüche 1 bis 11, **dadurch gekennzeichnet, dass** als [SiO_{4/2}]-Ausgangsstoff Tetraethoxysilan (TEOS) oder Wasserglas oder deren Hydrolyseprodukte eingesetzt werden.

## Claims

1. Method for producing organically modified aerogels by
i. preparing a sol comprising [SiO_{4/2}] units,
ii. dispersing the resultant sol in a continuous phase where the sol forms a separate phase and the continuous phase comprises not less than 20 wt% of organosiloxane,
iii. forming a gel from the sol in the continuous phase,
iv. surface modifying the resultant gel in the presence of a compatibilizer in the continuous phase where acids or chlorosilanes or mixtures thereof are admixed as initiator,
v. and drying the gels obtained.

2. Method according to Claim 1, **characterized in that** the organosiloxane used is a disiloxane of the formula R₃Si-O-SiR₃, where each R may be the same or different and is hydrogen or a substituted or unsubstituted organic moiety.

3. Method according to either or both of Claims 1 and 2, **characterized in that** the compatibilizer is admixed in the step of preparing the sol or is formed therefrom.

4. Method according to one or more of Claims 1 to 3, **characterized in that** alcohols are used as compatibilizer.

5. Method according to one or more of Claims 1 to 4, **characterized in that** step iv takes place without a solvent exchange beforehand.

6. Method according to one or more of Claims 1 to 5, **characterized in that** the initiator consists of trimethylchlorosilane or hydrochloric acid or mixtures thereof.

7. Method according to one or more of Claims 2 to 6, **characterized in that** the disiloxane used is hexamethyldisiloxane.

8. Method according to one or more of Claims 4 to 7, **characterized in that** ethanol is used as compatibilizer.

9. Method according to one or more of Claims 1 to 8, **characterized in that** not more than 20 g of initiator are used per 100 g of gel.

10. Method according to one or more of Claims 1 to 9, **characterized in that** the temperature for the surface-modifying step (step iv) is between 40 and 80°C.

11. Method according to one or more of Claims 1 to 10, **characterized in that** the duration of the surface-modifying step (step iv) is below 5 hours.

12. Method according to one or more of Claims 1 to 11, **characterized in that** tetraethoxysilane (TEOS) or water glass or hydrolysis products thereof are used as [SiO_{4/2}] starting material.

## Revendications

1. Procédé de fabrication d'aérogels modifiés organiquement, selon lequel
i. un sol contenant des unités [SiO_{4/2}] est fabriqué,
ii. le sol obtenu est dispersé dans une phase continue, le sol formant une phase séparée et la phase continue contenant au moins 20 % en poids d'organosiloxane,
iii. un gel est formé à partir du sol dans la phase continue,
iv. le gel obtenu est modifié en surface en présence d'un agent de compatibilisation de phases dans la phase continue, des acides ou des chlorosilanes ou des mélanges de ceux-ci étant ajoutés en tant qu'initiateur,
v. et les gels obtenus sont séchés.

2. Procédé selon la revendication 1, **caractérisé en ce qu'**un disiloxane de formule R₃Si-O-SiR₃ est utilisé en tant qu'organosiloxane, les R pouvant être identiques ou différents, et représentant l'hydrogène ou un radical organique substitué ou non substitué.

3. Procédé selon une ou plusieurs des revendications 1 à 2, **caractérisé en ce que** l'agent de compatibilisation de phases est déjà ajouté lors de la fabrication du sol ou est formé par celui-ci.

4. Procédé selon une ou plusieurs des revendications 1 à 3, **caractérisé en ce que** des alcools sont utilisés en tant qu'agents de compatibilisation de phases.

5. Procédé selon une ou plusieurs des revendications 1 à 4, **caractérisé en ce que** l'étape iv a lieu sans échange de solvant préalable.

6. Procédé selon une ou plusieurs des revendications 1 à 5, **caractérisé en ce que** l'initiateur est constitué par du triméthylchlorosilane ou de l'acide chlorhydrique ou des mélanges de ceux-ci.

7. Procédé selon une ou plusieurs des revendications 2 à 6, **caractérisé en ce que** de l'hexaméthyldisiloxane est utilisé en tant que disiloxane.

8. Procédé selon une ou plusieurs des revendications 4 à 7, **caractérisé en ce que** de l'éthanol est utilisé en tant qu'agent de compatibilisation de phases.

9. Procédé selon une ou plusieurs des revendications 1 à 8, **caractérisé en ce qu'**au plus 20 g d'initiateur pour 100 g de gel sont utilisés.

10. Procédé selon une ou plusieurs des revendications 1 à 9, **caractérisé en ce que** la température lors de la modification de surface (étape iv) est comprise entre 40 et 80 °C.

11. Procédé selon une ou plusieurs des revendications 1 à 10, **caractérisé en ce que** la durée de la modification de surface (étape iv) est inférieure à 5 heures.

12. Procédé selon une ou plusieurs des revendications 1 à 11, **caractérisé en ce que** du tétraéthoxysilane (TEOS) ou du verre soluble ou leurs produits d'hydrolyse sont utilisés en tant que matière première [SiO_{4/2}].
